(19) Europäisches Patentamt / European Patent Office / Office européen des brevets

(11) **EP 3 317 643 B1**

(12) **EUROPEAN PATENT SPECIFICATION**

(45) Date of publication and mention
of the grant of the patent:
**20.03.2024 Bulletin 2024/12**

(21) Application number: **16733539.7**

(22) Date of filing: **30.06.2016**

(51) International Patent Classification (IPC):
**G01N 21/17** $^{(2006.01)}$     **G01N 21/64** $^{(2006.01)}$

(52) Cooperative Patent Classification (CPC):
**G01N 21/1717; G01N 21/645;** G01N 21/648

(86) International application number:
**PCT/EP2016/065232**

(87) International publication number:
**WO 2017/001536 (05.01.2017 Gazette 2017/01)**

(54) **MODULATION OF LUMINESCENT DYES**

MODULATION VON LUMINESZENTEN FARBSTOFFEN

MODULATION DE COLORANTS LUMINESCENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2015 PCT/EP2015/174675**

(43) Date of publication of application:
**09.05.2018 Bulletin 2018/19**

(73) Proprietor: **IMEC VZW**
**3001 Leuven (BE)**

(72) Inventors:
• **PEUMANS, Peter**
**3001 Leuven (BE)**
• **LAGAE, Liesbet**
**3001 Leuven (BE)**
• **VAN ROY, Willem**
**3001 Leuven (BE)**
• **STAKENBORG, Tim**
**3001 Leuven (BE)**
• **VAN DORPE, Pol**
**3001 Leuven (BE)**

(74) Representative: **Winger**
**Mouterij 16 bus 101**
**3190 Boortmeerbeek (BE)**

(56) References cited:
US-A1- 2005 008 253     US-A1- 2010 041 166
US-A1- 2010 267 165     US-A1- 2014 154 813

• AMOS DANIELLI ET AL: "Detection of fluorescent-labeled probes at subpicomolar concentrations by magnetic modulation References and links", OPTICS EXPRESS, vol. 16, no. 23, 10 November 2008 (2008-11-10), pages 19253-19259, XP055085408,
• Anonymous: "Abberior CAGE 500", Product information, 6 February 2018 (2018-02-06), XP055608208, Retrieved from the Internet: URL:https://www.abberior.com/jtl-shop/medi afiles/Sonstiges/Product_Information/Produ ct_Information_CAGE_500.pdf [retrieved on 2019-07-23]
• G. Marriott ET AL: "Optical lock-in detection imaging microscopy for contrast-enhanced imaging in living cells", PNAS, vol. 105, no. 46, 18 November 2008 (2008-11-18), pages 17789-17794, XP055366352, US ISSN: 0027-8424, DOI: 10.1073/pnas.0808882105
• Anonymous: "00289 Anti-Rabbit IgG-Abberior STAR 512 antibody produced in goat", Product information, 1 January 2016 (2016-01-01), XP055760888, Retrieved from the Internet: URL:https://www.sigmaaldrich.com/content/d am/sigma-aldrich/docs/Sigma/Datasheet/11/0 0289dat.pdf [retrieved on 2020-12-17]
• Chris I. Richards ET AL: "Optically Modulated Fluorophores for Selective Fluorescence Signal Recovery", Journal of the American Chemical Society, vol. 131, no. 13, 8 April 2009 (2009-04-08), pages 4619-4621, XP055366310, US ISSN: 0002-7863, DOI: 10.1021/ja809785s

- **Jung-Cheng Hsiang ET AL: "Optically Modulated Fluorescence Bioimaging: Visualizing Obscured Fluorophores in High Background", Accounts of Chemical Research, vol. 47, no. 5, 20 May 2014 (2014-05-20), pages 1545-1554, XP055366308, US ISSN: 0001-4842, DOI: 10.1021/ar400325y**

**Description**

**Field of the invention**

The present invention relates to the field of sensors, more particularly for instance biosensors. More specifically it relates to sensors making use of luminescence for quantifying a component in a solution.

**Background of the invention**

Affinity based bio-sensors use an affinity probe which specifically binds to a target molecule. The target molecule is the molecule which comprises or consists of the analyte molecule that needs to be quantified. In affinity based bio-sensors the binding event is detected by a transduction scheme. This can be a direct detection of the binding event (e.g. in a label free sensor), or it may be an indirect chain of interactions that can be detected. In the last case a second probe with a label allows to obtain e.g. an optical or electrochemical signal representative for the amount of analyte being present. The label may for example be a fluorophore or an enzyme that catalyzes still another reaction that for example provides an optical or electrochemical signal.

In affinity based bio-sensors with fluorescence signal transduction, a bulk sample is sent over a surface, and the target molecule (analyte) is bound by an affinity probe on the surface. The presence of target molecules on the surface is thereby correlated with the presence of labels on the surface. These labels may for example be fluorescent. In such bio-sensors the fluorescent light is captured and its intensity is a measure for the amount of analyte molecules present in the original bulk sample. The affinity probe may for example be an antibody, an antigen, an aptamer, complementary DNA or a molecularly imprinted surface. In the affinity based fluorescent bio-sensor with evanescent excitation fluorescence, total internal reflection may be used to create an evanescent field very close to the sensor surface, to excite only those fluorophores which are present very close to the surface, and of a large fraction of which can be expected that they are bound to an affinity probe on the surface.

Affinity based bio-sensors may for example use preferential modulation of a probe specific signal and use this modulation to increase the signal to noise ratio.

In US2010/041166A1 a method is disclosed for detecting a target within a population of molecules. Preferential modulation of a probe specific signal is done and the probe specific signal is detected over the background signal using the preferential modulation. Modulation may be done by moving the at least one labelled probe molecule in and out of an excitation beam.

In US2010/267165A1 the movement of the target particles is modulated. A sensor signal that is provided by the sensor unit is preferably demodulated by the evaluation module with respect to the modulation of the induced movement of the target particles. This allows to distinguish effects that go back to the targets and/or input light beam from other effects, i.e. from disturbances.

In US2005/008253A1 the intensity of light is varied to filter out background luminescence.

In US2014/154813A1 the pH is modulated in order to vary the intensity of the fluorescence. Further, US2014/154813A1 discloses adding different concentrations of a quenching agent to change the fluorescence intensity.

Danielli discloses detecting fluorescent-labeled probes by magnetic modulation and synchronous detection (AMOS DANIELLI ET AL: "Detection of fluorescent-labeled probes at subpicomolar concentrations by magnetic modulation", OPTICS EXPRESS, vol. 16, no. 23, 10 November 2008 (2008-11-10), pages 19253-19259, XP055085408).

Despite the already existing affinity based sensors there is still room for building improved affinity based sensors.

**Summary of the invention**

It is an object of the present invention to provide optical detection systems with a good, e.g. an improved, signal to noise ratio. It is an objective of the present invention to be able to separate the desired signal from background signal(s).

The above objective is accomplished by a method and device according to the appended claims.

In a first aspect, the present invention provides a sensor device as defined in claim 1, for quantifying luminescent targets.

It is an advantage of the present invention that the desired signal can be separated from the background signal by modulating a physical parameter which influences the luminescence of the target. It is thereby an advantage of the present invention that the modulation has a different impact on the desired signal than on the background signal. It is an advantage of the present invention that by correlating the detected signal obtained from the detector with the modulation of the physical parameter, the signal to noise ratio of the sensor device can be increased. It is an advantage of the present invention that the background signal can be decreased with 3 dB or more, preferably with 10 dB or more, or 20 dB or more, or 40 dB, or more. The target concentration may for example be below 10 nM, or even below 1 nM, or even below 100 pM, or even below 10 pM.

In the present invention the processor is adapted for taking into account the dependency of the luminescent signal of the target on the modulation of the physical parameter and/or the dependency of the background signal on the modulation of the physical parameter.

It is an advantage of embodiments of the present invention that the difference in modulation dependency of the desired signal and of the background signal can be exploited to increase the signal to noise ratio. It is an advantage of embodiments of the present invention that the minimum concentration of targets which can be detected can be decreased.

In embodiments of the present invention the device is adapted for use with fluorescent targets.

It is an advantage of embodiments of the present invention that the radiative lifetime of a fluorescent target is limited (e.g. around 5 ns or less). This allows to decrease the measurement time or to increase the number of measurements after which averaging can be applied.

In embodiments of the present invention the modulator is further adapted for changing the temperature of the device.

It is an advantage of embodiments of the present invention that the temperature is a physical parameter which can be easily modulated. The modulator can for example be a resistor or a Peltier element. Such modulators are easy to build in a miniaturized version, for instance into a chip. It is thereby an advantage that the desired signal and the background signals have a different temperature dependence. By modulating the temperature, the desired signal will therefore have a different modulation than the background signals. It is an advantage of embodiments of the present invention that this different response can be used to increase the signal to noise ratio.

In embodiments of the present invention the modulator is further adapted for changing the power and/or the wavelength of excitation light generated by the light source.

It is an advantage of embodiments of the present invention that by modulating the power and/or the frequency of the excitation light, the response of the luminescent target can be modified. It is an advantage of embodiments of the present invention that this modification can be different from the modification of the background signal. According to the present invention the luminescent targets can be photo-activated / deactivated by modulating the excitation light. This allows to alternatingly do a first background measurement (without desired signal being present) and a second measurement of the desired signal including the background signal. It is an advantage of embodiments of the present invention that by analyzing consecutive measurements the contributing background signal can be reduced or removed.

In embodiments of the present invention the device may be used with the target present in a liquid, wherein the modulator is further adapted for changing the pH value of the liquid.

It is an advantage of embodiments of the present invention that the luminescence response of the target can be modified by modulating the pH value of the liquid in which the target is present. It is an advantage of embodiments of the present invention that the modulation of the background signal under influence of a changing pH value is different from the modulation of the desired signal.

In embodiments of the present invention the modulator is adapted for modulating the amount of luminescent targets contributing to the desired signal and/or the amount of sources contributing to the background signal.

It is an advantage of embodiments of the present invention that the sources contributing to the measured signal can be distinguished. By modulating the amount of luminescent targets contributing to the desired signal, the contribution of the luminescent targets can be quantified. By modulating the amount of sources contributing to the background signal, the contribution of the sources to the background signals can be quantified. Modulation of the amount of luminescent targets contributing to the desired signal and/or to the background signal may be done by stimuli with effect on the binding or immobilization of the desired and/or undesired evince, for instance by differently influencing specific and non-specific bonds.

In embodiments of the present invention the modulator is further adapted for modulating the rate at which the amount of luminescent targets binds.

This may be done by alternating the flow over the sensor surface between a flow of the unknown sample and a flow of liquid, for instance buffer, without the target molecules. After saturation of the background signal (which happens relatively fast), the concentration of the target molecule may be modulated, which will modulate the slope of the accumulation curve. The difference in slope between accumulation with and without unknown sample can be used to determine the target concentration in the unknown sample. It is an advantage of embodiments of the present invention that the modulation of the slope of the measured signal can be used to quantify the amount of luminescent targets. In embodiments of the present invention the background signal saturates faster than the desired signal. When the background signal is saturated, the contribution of the background to the total signal is constant. The slope of the total signal will from then on be defined by the rate at which the amount of luminescent targets increases. Hence, after the background signals have saturated, modulating the concentration of the target will modulate the slope of the accumulation curve. In embodiments of the present invention the difference in slope of the accumulation curve is correlated with the applied modulation to obtain the target concentration.

A sensor device according to the present invention comprises:

- a surface or a three dimensional volume for binding the luminescent targets,
- an evanescent field generating structure, wherein the light is coupled to the evanescent field generating structure and wherein the evanescent field generating structure is adapted for generating an evanescent field at the surface or in the three dimensional volume.

It is an advantage of embodiments of the present invention that the illuminated volume is concentrated towards the luminescent targets and the therefore the background signal decreases whereas the desired signal remains the same when comparing with devices with free space illumination.

In a second aspect, the present invention provides a diagnostic device comprising a sensor device according to the first aspect of the present invention, for sensing an analyte and generating a sensing signal, and an output unit for providing an output of said sensor device on which a diagnose can be based. The output unit may be adapted for outputting a signal representative for presence / absence or concentration of the analyte.

In a third aspect, the present invention provides a method for quantifying luminescent targets as defined in claim 11.

In the present invention the correlating step comprises taking into account the dependency of the desired signal on the modulation of the physical parameter and/or the dependency of the background on the modulation of the physical parameter.

A method according to embodiments of the present invention may comprise:

- calibrating the luminescence of the target in function of the modulation of the physical parameter, and/or

- calibrating the dependency of the background signal in function of the modulation of the physical signal.

It is an advantage of embodiments of the present invention that calibration can be done before, during or after measuring the target luminescence. In embodiments of the present invention this is enabled by measuring the dependency of the background signal in the presence of a high amount of targets such that the signal is very high compared to the noise and by measuring the dependency of the background signal when no targets are present. A separate channel could be foreseen such that in one channel targets are present and in the other channel no targets are present. The other channel can then be used for background measurements.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

## Brief description of the drawings

FIG. 1 is a schematic drawing of a device in accordance with embodiments of the present invention.
FIG. 2 is a schematic drawing illustrating the origin of desired and background signals in a device in accordance with embodiments of the present invention.
FIG. 3 shows possible positions of a heater in a device, wherein the device is configured for free space excitation.
FIG. 4 shows possible positions of a heater in a device in accordance with embodiments of the present invention wherein the device is configured for evanescent excitation.
FIG. 5 shows a temperature dependence of the signal of a fluorophore which is quenched at low temperature and a temperature dependence of a background signal.
FIG. 6 shows a temperature step applied to a device in accordance with embodiments of the present invention.
FIG. 7 shows a series of temperature steps applied to a device in accordance with embodiments of the present invention.
FIG. 8 shows a sine wave modulated temperature applied to a device in accordance with embodiments of the present invention.
FIG. 9 shows different steps of a method in accordance with embodiments of the present invention.
FIG. 10 shows a measured signal and a desired signal in an endpoint measurement in accordance with embodiments of the present invention.
FIG. 11 shows the effect on the measured signal of alternating the buffer and sample, in accordance with embodiments of the present invention.
FIG. 12 shows the obtained desired signal in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

As used herein and unless provided otherwise, the term "analyte" or "target" refers to the substance to be measured, the substance having or not having a biological origin. By the expression "substance having a biological origin", we intend to mean a substance that is present or produced in a living organism. Particularly, the substance may be a biomolecule. For instance, the analyte may be a protein or an antigen. The analyte is labeled for detection. In the context of the present invention, the terms target and analyte are considered to be synonyms.

By the term "biomolecule" is meant any molecule that is present in living organisms, including large macromolecules such as proteins, polysaccharides, lipids, and nucleic acids, as well as small molecules, such as primary metabolites, secondary metabolites, and natural products. The term "biomolecule" also encompasses molecules with similar properties and/or structure and/or composition, but that have been manufactured artificially rather than in a living organism.

Where in embodiments of the present invention reference is made to the modulation dependency of the desired signal or of the background signal, reference is made to the dependency of the desired signal on the modulation of the physical parameter or to the dependency of the background signal on the modulation of the physical parameter.

Where in embodiments of the present invention reference is made to "luminescence of a target", reference is made to emission of light by the target, not resulting from thermal emission. Typically, in the context of the present invention, luminescence will be photoluminescence, generated by absorption of photons; such as fluorescence or phosphorescence. The present invention, however, is not limited to this type of luminescence, and can also be applied in case of, for instance, bioluminescence or chemiluminescence (emission as a result of a (bio)chemical reaction by an organism) or electroluminescence (a result of an electric current passed through the target).

Where in embodiments of the present invention reference is made to the "brightness" of a luminescent center, reference is made to the strength of the luminescent response to the excitation light. For a fluorophore the brightness is the product of the absorption coefficient (= which fraction of the light is absorbed) and the quantum efficiency (= which fraction of the absorbed light gives rise to the emission of a fluorescent photon). For a scattering center the brightness describes which fraction of the light is scattered.

Where in embodiments of the present invention reference is made to the "background signal", reference is made to any signal which is disturbing the measurement of the desired signal. This may comprise background signals from luminescent sources which do not form part of the target under study. This may comprise luminescence which is scattered by scattering centers in the device. This may comprise any other noise source which is present in the device.

Where in embodiments of the present invention reference is made to "quantifying luminescent targets", reference is made to either determining the presence of luminescent targets, or determining the amount of luminescent targets, or determining the concentration of luminescent targets.

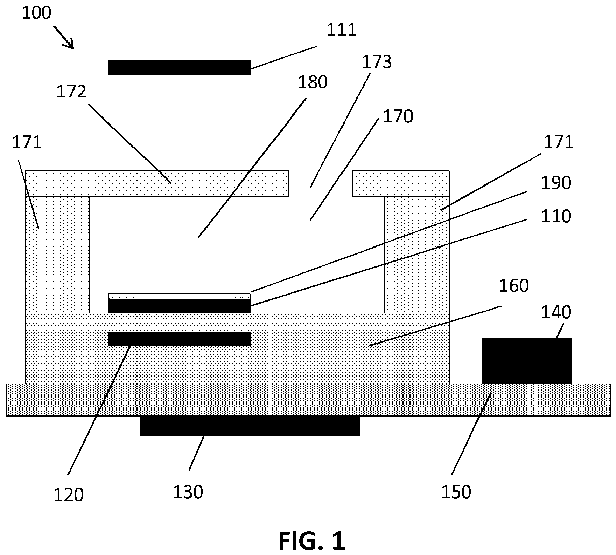

In a first aspect, the present invention provides a device 100 for quantifying targets (analyte) which may be present in a fluid sample, e.g. in a biological fluid such as a blood sample, a urine sample, a drop of saliva, sperm. One embodiment of such device 100 is schematically illustrated in FIG. 1. Devices according to embodiments of the present invention may comprise a microfluidic channel 170 for guiding the sample towards a cavity 180 in or on a substrate 160, for instance a semiconductor substrate such as e.g. a silicon substrate or a transparent substrate such as e.g. a glass substrate. The microfluidic channel 170 and/or the cavity 180 may have sidewalls 171 and top 172, inlet(s) and/or outlet(s) 173. These sidewalls 171, 172 and/or inlets/outlets 173 may be transparent or opaque. The cavity 180 and the microfluidic channel 170 may be the same. The cavity 180 may comprise a surface 190 on which affinity probes may be present for capturing the target molecule. In embodiments of the present invention the analyte may be luminescent (e.g. fluorescent) itself or it may be labeled with a luminescent label.

In embodiments of the present invention the sample may be injected in the device as a one-time event (e.g. filling a reservoir) or the injection may be a continuous event (e.g. triggered by starting a flow) that continues during the subsequent steps when quantifying the targets.

According to the present invention the luminescent targets are illuminated through evanescent illumination. Outside the scope of the present invention, in free space illumination light source 111 is illuminating at least the surface 190 with the affinity probes. The light source 111 may be located at the top (the top wall 172 and any other layer between the light source 111 and the cavity 180 should be transparent) or bottom (the substrate 160 and any other layer between the light source 111 and the cavity 180 should be transparent) of the sensor device 100. The light source 111 may be, amongst others, a laser, a laser diode, a VCSEL, a LED, a lamp, a Tungsten lamp, a Halogen lamp, a Mercury lamp, a Xenon lamp, a Metal Halide lamp. In embodiments of the present invention the light coming from the light source 111 may be projected or focused by lenses or mirrors or a microscope or optical fibers on the surface 190. (In this case no evanescent field generating structure 110 - see below - is present).

Devices according to embodiments of the present invention comprise an evanescent field generating structure 110 for generating an evanescent field at the surface 190.

The evanescent field generating structure 110 may be integrated in or on the substrate 160 or it may be separate from the substrate 160 (e.g. against the microfluidic channel top 172 or sidewalls 171). In embodiments of the present invention the light of the light source 111 may be guided towards the cavity 180 using a connecting structure 112 such as an optical waveguide 112. The light may be coupled to the evanescent field generating structure 110 or to the connecting structure 112 using any suitable optical device, such as for instance a grating coupler or a butt coupler.

In embodiments of the present invention the light source 111 may be integrated in the substrate 160. In case of close integration with the rest of the device 100, the light source 111 may be, amongst others, a laser, a laser diode, a VCSEL, a LED. These light sources may be applied in the case of evanescent excitation.

In case the light source 111 is not necessarily closely integrated with the rest of the device 100 it may also be a laser, a lamp, a Tungsten lamp, a Halogen lamp, a Mercury lamp, a Xenon lamp, a Metal Halide lamp. This type of light source can also be applied in the case of evanescent excitation.

Devices 100 according to the present invention moreover comprise a detector 120 which can detect the luminescence of the luminescent target after the target has been excited with the evanescent field generating structure 110 or light source 111. The measured signal is composed of a desired signal which originates from the luminescent targets and a background signal emanating from other luminescent sources present in the system. The detector 120 may be a multi-pixel detector for imaging the surface 190 of the device 100. The detector 120 may be, amongst others, an imager, a line detector, a single detector, a CMOS detector, a CCD detector, a(n array of) photodiode(s), an (array of) avalanche photodiode(s), a(n array of) photomultiplier tube(s) PMT(s). The detector 120 may be located external to the cavity 180 (not integrated in / in physical contact with either substrate 160 or top 172). In that case at least one top or bottom wall (e.g. walls from the microfluidic channel 171, 172, substrate 160, any other layer) should be transparent such that the luminescence signals from the luminescent targets can exit from the cavity through this wall. In case the detector is located external to the cavity additional lenses, as used in classical optics, may be applied for guiding the luminescence signals towards the detector.

In embodiments of the present invention the detector 120 may be integrated with the cavity 180. It may be present at the top or at the bottom of the cavity. The bottom side is the side where the target molecules bind to the affinity probes, the top side is the opposite side thereof. The detector 120 may be present on the inside or the outside of the cavity. When on the outside a transparent wall of the cavity is required.

In embodiments of the present invention luminescence from the luminescent targets may be collected by a waveguide connected to the detector 120. This waveguide may be the same as the excitation waveguide 112, or it may be a different waveguide. The luminescent light may be coupled from the waveguide into the detector 120 the same way as the light coming from the light source is coupled into the waveguide 112 (e.g. through a grating coupler, butt coupling etc.). This may be the same coupler as the input coupler, if it has enough bandwidth and if incoming and outgoing light is handled appropriately, or it may be a different coupler. In embodiments of the present invention the input coupler and the output coupler are different. In embodiments of the present invention diffraction and/or reflection optics may be present between the waveguide and the detector. This may for example be a lens to project the output couplers onto the detector. Filters may be present, in, on or before the detector, for attenuating light which is outside the frequency range of the light generated by the luminescent targets. The detector 120 may be a CMOS imager.

Devices 100 according to the present invention moreover comprise a modulator 130 for modulating a physical parameter which influences the luminescence of the luminescent target and/or the luminescence of the background contributions such that the resulting modulation of the desired signal is different from the modulation of the background signal. The physical parameter is at least the exciting light for photoactivating and deactivating the luminescent targets, and may additionally for example be the temperature of the target and/or the power/frequency of the excitation light and/or the pH of the solution in which the target is present and/or the concentration of the target.

A device 100 according to the present invention moreover comprises a processor 140 which is configured to correlate the luminescence detected by the detector 120 with the modulation of the physical parameter. The cross-correlation between both might for example be calculated. The term processor 140 should be interpreted widely. It can be a microprocessor but it can for example also be an ASIC (application specific integrated circuit) or an FPGA (field programmable gate array), or an analog or digital signal processing device. The processing may be distributed. It may for example be partly or completely running on an external device (e.g. a smartphone). The external device, e.g. smartphone, may for example receive raw data (digitized output of the detector) or it may receive already pre-treated data.

A device 100 according to embodiments of the present invention may be present on a printed circuit board 150. It may comprise a needle or a suction element like a cotton strip (not illustrated) and a microfluidic channel 170 for taking or receiving a fluid sample and guiding it to the surface 190. It is thereby an advantage of embodiments of the present invention that the different features required for executing the steps for analyzing a fluid sample may be integrated in one and the same device 100.

Depending on the embodiment, the fluidics of the device 100 can be different. They can for example be capillary and/or they can be pressure driven, e.g. pumped. Pumps can for example control the pressure or the volumetric flow rate. The microfluidic channel 170 can be an open channel or a closed channel. A schematic drawing of a device 100 in accordance with embodiments of the present invention and comprising the features as described above is shown in FIG. 1.

The size of the device 100, in accordance with embodiments of the present invention, is limited. The size may for example be comparable to the size of an SD-card or of a micro-SD card or of a USB-stick.

Embodiments of the present invention can for example be used to check if certain biomarkers are present in the fluid (e.g. presence of antibodies against HIV in a blood sample).

In embodiments of the present invention the background signal may have different origins. Luminescent sources may be present which are not linked with the analyte, hence which do not form part of target molecules. These will, nevertheless, be detected by the detector 120 and will increase the background signal of the device 100.

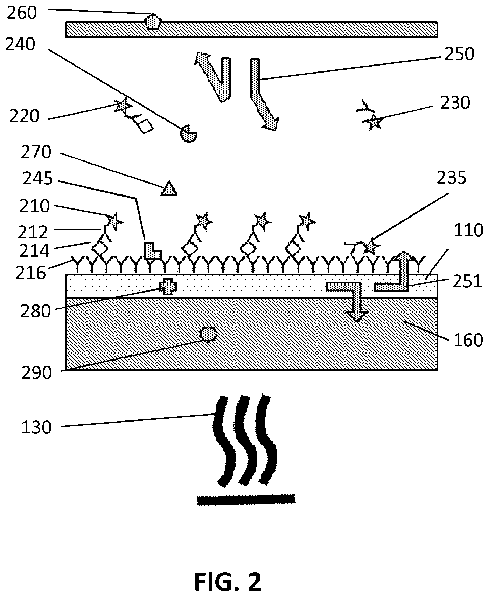

In an exemplary embodiment of the present invention, illustrated in FIG. 2, the detector 100 is based on a sandwich ELISA like assay. The invention, however, is not limited thereto, but may for instance also be based on competitive assays and inhibition assays, where analogous sources of background are present. In a sandwich assay the target may comprise luminescent parts that are e.g. fluorescent, or may be attached to luminescent labels that are e.g. fluorescent labels. A fluorescence signal which is coming from a target which is bound to the surface 190 or immobilized in a 3D matrix or gel (not in the embodiment illustrated), whereby the target comprises a fluorescent label which is bound to the analyte, is part of the desired signal. In fluorescence detection, fluorescent signals coming from labels in the bulk are to be avoided. It is an advantage of embodiments of the present invention which comprise an evanescent field generating structure 110 that contribution of these signals can be reduced. Sources of the desired signal and of background signals in a device 100 comprising a sandwich ELISA like assay, according to embodiments of the present invention are illustrated in FIG. 2. FIG. 2 shows a sketch for the case of pre-incubation. In that case in a first step the detection probe (= detection label) are mixed with the analyte. In a next step this mixture flows over the surface 190 with the capture probes. An advantage thereof is that real-time measurements can be performed, in which the rate at which the target binds to the surface can be followed. In this example the origins of the desired signal are the labels 210 indicated by a star which are connected to the targets 214 indicated by a rhombus and which are bound to the surface 190 (or could alternatively be immobilized in a 3D matrix or gel). In the example the labels 210 are fluorescent labels which are linked to a second affinity probe 212 (e.g. second antibody). The second affinity probe 212 is linked to a target 214 which is linked with a first affinity probe 216 (e.g. first antibody). In the embodiment illustrated, the first affinity probes 216 are forming the surface 190 on top of the evanescent field generating structure 110. Instead of a surface 190, in other embodiments of the present invention, the targets may be bound on a 3D-matrix or gel. In that case the first affinity probes are immobilized in a 3D matrix or gel. In the pre-incubation period, the labels indicated with reference 220 are those labels which are already connected with a target 214 but are not yet caught on the surface 190. In the embodiment illustrated the targets 214 have a rhombus shape, the detection probes 212 (e.g. second antibodies) have an inverse Y-shape and the capture probes 216 (e.g. capture antibodies) have a Y-shape. In such a device 100, besides other noise sources, the background signal may be coming from:

- (Auto)Fluorescent molecules 245, including labels 235 which are (non-specifically) bound to the surface 190 and which are not connected with the targets 214. These are illustrated by the L-shaped symbol 245 in FIG. 2. These also include the labels 235 which are bound to the second antibody 212 and to the surface 190, but wherein the second antibody 212 is not bound to the target 214.
- Molecules 240 in solution. These may be (auto)fluorescent molecules 240 which have no link with a second antibody. They are illustrated by the pie-shape symbol 240 in FIG. 2. They may for example be proteins. They mostly come from the sample, but can also come from the detection antibody mix, or the blocking agents (e.g. BSA). Molecules 240 are molecules that cannot be avoided, as they are part of the sample or a key ingredient in the assay. They may or they may not be fluorescent. When they are not fluorescent they still may scatter light and therefore increase the background signal.
- Free labels 230 in the solution which are bound to the second antibody 212 but wherein the second antibody 212 is not bound to the target 214. These labels 230 are intentionally fluorescent, and they are present in a real-time (wash-free) assay. These labels 230 are not present in an endpoint assay, after washing.
- Labels 220 in the solution which are bound to the second antibody 212 and wherein the second antibody 212 is bound to the target 214. These labels 220 are intentionally fluorescent, and they are present in a real-time (wash-free) assay. These labels 230 are not present in an endpoint assay, after washing.
- (Auto)Fluorescent centers 270 in the solution. The triangle 270 in FIG. 2 is an illustration of such a fluorescent center. These centers are present in the buffer (the solvent) itself (i.e. the matrix wherein the (bio)molecules are present). These centers may for example be present in a buffer used in a bioreactor (when using a sensor 100 according to embodiments of the present invention in the bioreactor). In that case the buffer may be the cell culture medium which can have a complex composition and may comprise components that show luminescence (e.g. fluorescence). Often additional components are added depending on the exact nature of the cells/bacteria/yeasts/tissue that is cultured. These centers 270 will stay also when changing to buffer flow whereas the autofluorescent molecules 240 are absent in the buffer.
- (Auto)Fluorescent centers 280 in the structure for generating an evanescent field 110. The cross 280 in FIG. 2 is an illustration of such a fluorescent center.
- (Auto)Fluorescent centers 290 in the substrate 160. The circle 290 in FIG. 2 is an illustration of such a fluorescent center.
- (Auto)Fluorescent centers 260 in any other part of the device 100. The pentagon 260 in FIG. 2 is an illustration of such a fluorescent center.
- Scattering 250, 251 of the excitation light. The arrows 250, 251 in FIG. 2 illustrate the scattering of the excitation light in case of free space excitation (250, e.g. illumination through a lens) and in the case of excitation using an evanescent field (251, e.g. using a waveguide). The scattering may e.g. be caused by imperfections or discontinuities in the device or the sample. Embodiments of the present invention comprise for example a rejection filter for filtering out the direct and/or reflected and/or scattered excitation light. However, the rejection ratio of this filter is not infinite and therefore a part of the scattered excitation light reaches the detector.

These background signals increase the noise and therefore decrease the signal to noise ratio, while it is desired to have the signal to noise ratio as large as possible.

Instead of pre-incubation, another approach would be to first send over the analyte, wash to remove any unbound particles, then send over the labelled detection probe, and wash again. In that case, some background sources are different/absent (e.g. the combination 220 would not be present, and some centers 240 would not be present in the detection probe). However, in this approach we cannot do real-time measurements, so the time-to-response is longer) Embodiments of the present invention are not limited to the standardized enzyme-linked immunosorbent assay (ELISA) as illustrated in FIG. 2 or its variants, but include any affinity-based assay and can for example also be DNA based. The DNA measurements may comprise a PCR step and may involve a higher fluorophore concentration.

In embodiments of the present invention the modulator 130 is provided to aid increasing the signal to noise ratio.

In particular embodiments, the modulator can change the temperature of the device 100. In such embodiments, luminescent labels (e.g. fluorophores) may be chosen of which the luminescent response has a distinct temperature dependency. It is an advantage of embodiments of the present invention that the desired signal has, in that case, a different temperature behaviour than the background signal.

The modulator 130 may comprise a heater and a heater control system for controlling the temperature of the system. The heater control system may include a temperature sensor. This temperature sensor may be used for controlling the temperature (in a closed loop system) or for monitoring the temperature only (in an open loop system). The heater may for example be a resistive heater or a Peltier element or a radiative heater or an infrared heater.

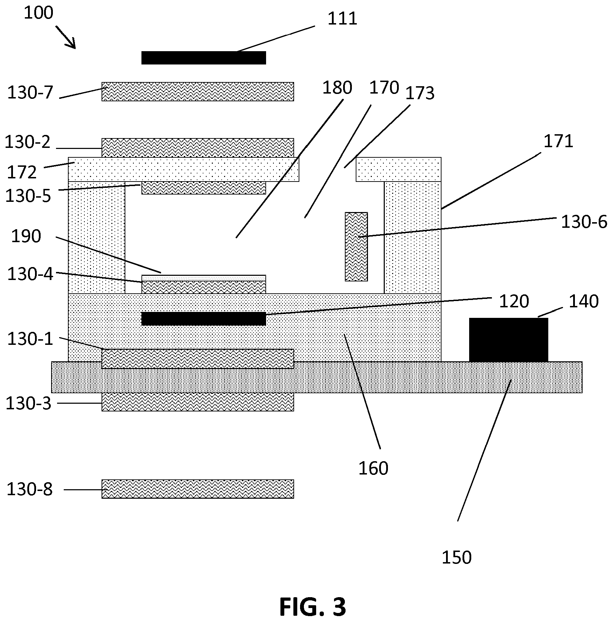

FIG. 3 shows possible positions of a heater 130, in a device 100 wherein the device is configured for free space excitation. The heater 130 may be located on position:

> 1 = corresponds with the bottom of the device 100, in the example this is between the detector 120 and the PCB 150
> 2 = corresponds with the top of the device 100, in the example this is above the top wall 172 which closes the microfluidic channel; in that case the light source 111 may be at the bottom (e.g. with transparent substrate)
> 3 = corresponds with the backside of the PCB 150 (if present), in the figure this is on the side of the PCB opposite to the cavity 180
> 4 = inside the cavity, under the surface 190
> 5 = inside the cavity, at the top side; in that case the light source may be at the bottom
> 6 = somewhere in the channel; in that case the heater may for example be carried to the measurement cavity 180 by the liquid flow consisting of the sample or a buffer
> 7, 8 = not in contact with the rest of the device 100; in that case the heater may for example be a radiative or an infrared heater

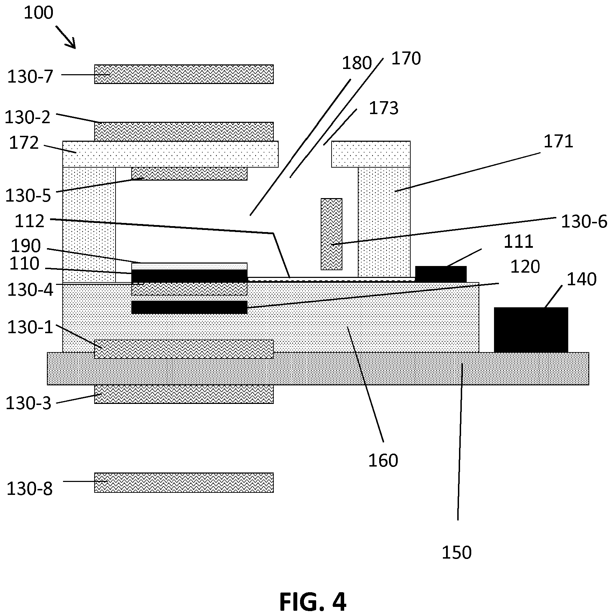

FIG. 4 shows the possible positions of a heater 130, in a device 100 in accordance with embodiments of the present invention wherein the device is configured for evanescent excitation. The possible positions of the heater 130 are essentially the same, except that location 4 where the heater 130 has to be positioned below the evanescent structure 110, such that the evanescent field generating structure 110 is between the surface 190 and the heater 130. Location 4 is preferably such that the heater 130 is outside of the evanescent field.

In the present invention the processor 140 takes into account the dependency of the luminescence of the label on the modulation of the physical parameter and/or the dependency of the background signal on the modulation of the physical parameter. The physical parameter is at least the exiting light and may additionally for example be the temperature. In embodiments of the present invention a temperature variation is applied between subsequent measurements and the known (or calibrated) temperature dependence of the background signals and of the desired signal is used to remove or attenuate the background response from the output signal of the detector 120.

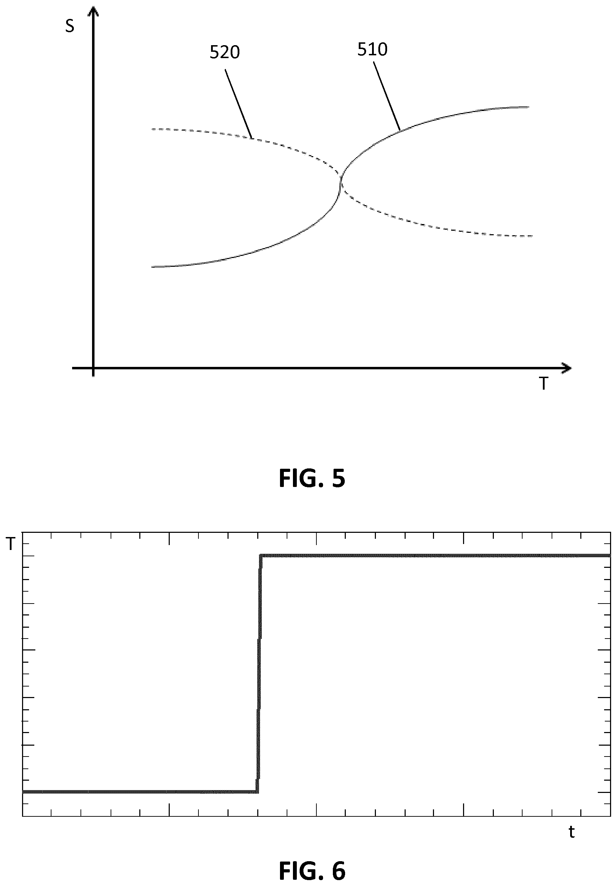

FIG. 5 illustrates an example of the temperature dependence of the signal of a fluorophore which is quenched at low temperature (line 510) and an example of the temperature dependence of a background signal (dashed line 520). The signal strength S is shown in function of the temperature T. In this example the power of the fluorescent signal of the quenched fluorophore is increasing with temperature whereas the power of the background signal is decreasing with temperature. In other embodiments of the present invention other temperature relationships may exist as long as the modulation of the desired signal is different from the modulation of the background signal. By measuring at different temperatures, the signal from the quenched fluorophores can be separated from the background signal by taking into account the respective temperature dependencies.

The processor 140 may for example be configured to apply the following exemplary correlation. If the signal (S) and the background (B) change with a factor a and b, a and b having been calibrated, when changing the temperature from T1 to T2, e.g.

- 

$$S2 = a \times S1 \quad \text{or} \quad S2/S1 = a \qquad (\text{e.g. } a > 1 \text{ on FIG. 5})$$

- $$B2 = b \times B1 \ \text{ or } \ B2/B1 = b \qquad (\text{e.g. } b < 1 \text{ on FIG. 5})$$

The responses (= signal + background) R1 and R2 are measured and can be written as:

- $$R1 = S1 + B1 \tag{1}$$

- $$R2 = S2 + B2 = a \times S1 \ + \ b \times B1 \tag{2}$$

S1 and B1 can be determined by solving these two equations since R1 and R2 are known (measured), and since a and b are known (calibrated). In this particular case: multiply eq (1) by b, then subtract eq (2):

- $$b \times R1 = b \times S1 + b \times B1 \qquad\qquad b \times (1)$$

- $$R2 = a \times S1 \ + \ b \times B1 \tag{2}$$

- $$b \times R1 - R2 = (b\text{-}a) \times S1 + (b\text{-}b) \times B1 = (b\text{-}a) \times S1$$

- $$--> S1 = (b \times R1 - R2) / (b\text{-}a)$$

- B1 can be determined in a similar way

This is true in general, even if more data points (= more equations R3 = ..., R4 = ...) and/or a more complex temperature modulation as e.g. FIGS 5-6 are applicable. In those cases the system is overdetermined. Instead of solving these equations analytically, which would give contradictions because of random noise, curve fitting may be used (e.g. maximum likelihood estimations).

In general, the fluorescent response of the fluorophore will be temperature dependent. In embodiments of the present invention, specific fluorophores may be used for which the fluorescence may increase with increasing temperature (e.g. from 10°C towards 60°C). This is may be caused by the fact that a quencher is bound to the fluorophore, and that the quenching is temperature dependent. At lower temperatures the quencher may be bound closely to the fluorescent group and therefore the fluorescence may be quenched whereas at higher temperatures the interaction may be broken causing the quencher to move further away and the label to become fluorescent. The brightness of (some of the) background sources (e.g. (auto)fluorescent molecules 240, 245, (auto)fluorescent centers 260, 270, 280, 290, scattering 250, 251) may show a different temperature dependence. This difference in temperature behaviour can be exploited to increase he signal to noise ratio by modulating the temperature and correlating the measured signal with the modulation, taking into account the temperature dependency of the fluorescent label and the temperature dependency of the free fluorophores (at least partly causing the background signal).

In embodiments of the present invention labels may be used which have an intrinsic temperature dependency. The labels may be designed specifically to increase the temperature dependency of the label.

In embodiments of the present invention different binding events may have a different temperature dependence. Since for example some non-specific interactions are weaker than a specific bond, such non-specifically bound molecules will disconnect more easily from the surface 190 than specifically bound molecules. This will result in a different temperature dependency of the fluorescent response for such non-specifically bound molecules compared to specifically bound molecules. The part of the background signal generated by the non-specifically bound molecules will decrease when they are disconnecting from the surface with increasing temperature. When disconnected they will go up in the bulk which is, in embodiments with an evanescent field generating structure 110, not illuminated by the light source. Hence, by bringing the surface 190 to a higher temperature, high enough to break such non-specific bonds, but low enough not to break specific bonds, the signal to noise ratio can be improved.

Some other non-specific interactions are stronger than a specific bond, such non-specifically bound molecules will disconnect less easily from the surface 190 than specifically bound molecules. This will result in a different temperature dependency of the fluorescent response for such non-specifically bound molecules compared to specifically bound molecules. The part of the background signal generated by the non-specifically bound molecules will remain unchanged when the specifically bound molecules are disconnecting from the surface with increasing temperature. When disconnected they will go up in the bulk which is, in embodiments with an evanescent field generating structure 110, not illuminated by the light source. Hence, by bringing the surface 190 to a higher temperature, high enough to break specific bonds but not such non-specific bonds, the signal to noise ratio can be improved.

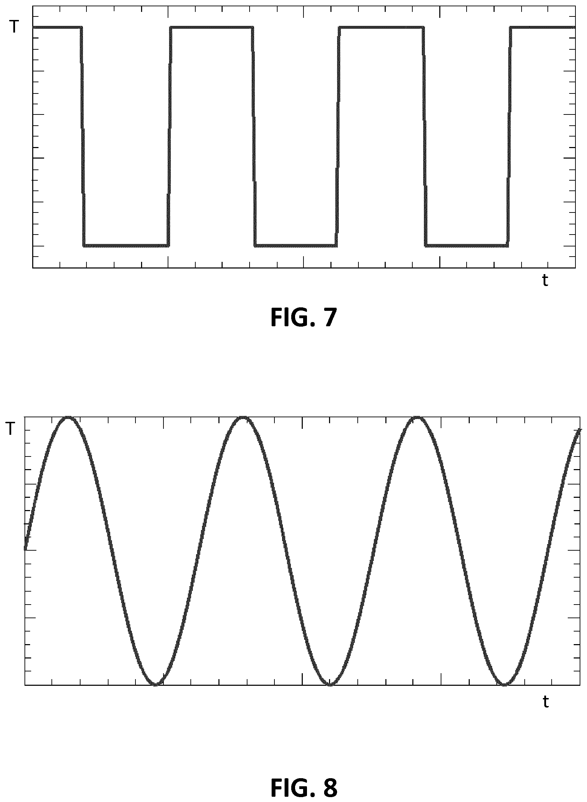

The temperature may be modulated in several ways. A temperature step or a series of temperature steps may be applied. A continuous modulation, such as for instance a sine wave modulation, of the temperature may be applied. FIG. 6 shows an exemplary temperature step which may be applied to a device 100 in accordance with embodiments of the present invention. In this figure a step up is shown, a step up may however be possible also. FIG. 7 shows an exemplary series of temperature steps which may be applied to a device 100 in accordance with embodiments of the present invention. FIG. 8 shows an exemplary sine wave modulated temperature which may be applied to a device 100 in accordance with embodiments of the present invention.

In embodiments of the present invention the modulator 130 may change the physical parameter(s) before a binding equilibrium is reached or after the binding equilibrium is reached. In the example of FIG. 2 first antibodies 216 may be linked to the surface 190 of the device 100. These antibodies 216 link with the targets 214 and through second antibodies 212 the luminescent label 210 may be linked with the analyte. The surface 190 may for example comprise between 1000 and 1 000 000 binding sites per $\mu m^2$ for example 20000 binding sites per $\mu m^2$. In embodiments of the present invention the number of binding events per $\mu m^2$ of surface 190 may be obtained by evaluating the following formula:

$$k_{ON}[A][B]$$

wherein [A] is the target concentration, and wherein [B] is the surface density of the free binding sites, and wherein $k_{ON}$ is the association rate constant. $k_{ON}$ is among other things defined by the reaction kinetics between the target and the capture probe and the mass transport kinetics of the target in the solution. The association rate constant may for example have an order of magnitude of $k_{ON} = 10^5 M^{-1}s^{-1}$. If the target concentration is for example [A] = 1 nM then:

$$k_{ON}[A] = 10^{-4}s^{-1}$$

meaning that each binding site has a chance of $10^{-4}s^{-1}$ to bind with a target.

At a low target concentration only a limited number of binding sites will be occupied. If the surface density of the binding sites (e.g. the surface 190 comprising the first antibodies) is [B] = $2 \times 10^4$ $\mu m^2$ the number of binding events per $\mu m^2$ per second equals:

$$k_{ON}[A][B] = 2\ s^{-1}\mu m^2$$

This rate decreases linearly with the target concentration and therefore also the desired signal decreases linearly with the target concentration.

The modulator 130 may modulate a physical parameter when the concentration of targets bound to the surface 190 has reached an equilibrium or when the concentration is still increasing.

In the present invention, mainly the surface 190 of the substrate 160 or a limited three dimensional volume is illuminated. This is by evanescent excitation. In these embodiments the bulk of the sample is not illuminated using free space light but using an evanescent light near the surface 190. The evanescent field region may have a thickness of a few nm-thick or even 10 nm thick or even between 10 nm and 100 nm thick. Such evanescent illumination is also referred to as TIRF (total internal reflection fluorescence). This can be achieved by having a beam of light, coming from the evanescent field generating structure 110, incident on the interface between the evanescent field generating structure 110 and the cavity 180 at an incident angle below the critical angle, resulting in a total internal reflection. It can also be achieved by confining the light in a guiding structure such as a waveguide. It is an advantage that TIRF can be applied in embodiments of the present invention. Only the luminescent labels (e.g. fluorophores) which are immobilized at the surface 190 of the substrate evanescent field generating structure 110, or which are in its immediate neighbourhood (i.e., within the range of the evanescent field) will be illuminated this way. The substrate 160, on which evanescent field generating structure 110 is fabricated may be a semiconductor substrate, a glass substrate, or any other suitable type of substrate. It may be a quartz substrate. Luminescent labels which are in the bulk solution are thereby not measured. When these luminescent labels in the bulk solution are not excited they will also not generate a background signal.

Embodiments of the present invention comprise a waveguide for guiding the excitation light towards the evanescent excitation plane. It is thereby an advantage of embodiments of the present invention that the luminescent labels (e.g. fluorophores) in the bulk solution will not be excited. Only the luminescent labels which are in the evanescent field volume will be illuminated. These luminescent labels are mainly the surface immobilized luminescent labels. The labels in the bulk, which are not illuminated or which are less illuminated than the immobilized labels at the surface, will therefore generate a smaller luminescent signal than the immobilized labels at the surface. It is therefore an advantage of embodiments of the present invention that by only illuminating the evanescent excitation plane, the signal to noise ratio can be increased.

In alternative embodiments of the invention, the desired signal may be separated from the background signals by additionally modulating parameters different from light, such as for instance temperature, pH, other chemical stimuli, or the concentration of the target and/or of other assay components. By going through the isoelectric point of a fluorophore or an (auto)fluorescent center, its charge state changes. This changes its electronic configuration, and may influence its optical properties (such as the absorption cross-section, also known as extinction coefficient, and/or the emission quantum efficiency and/or the absorption and/or emission spectra). It is an advantage of embodiments of the present invention that the physical parameters are selected such that they modulate the desired signal and such that modulation of the physical parameters does not have an effect on the scattering. By modulating these physical parameters and correlating the measurement result with the modulation, the contribution of the scattering signal can be decreased and may be even removed from the measured signal. It is an advantage of embodiments of the present invention that the physical parameters are selected such that modulation of the physical parameters has a different effect on the modulation of the desired signal than on the modulation of some of the background signals (e.g. some sources of fluorescent background). By correlating the measurement result with the applied modulation the contribution of these background signals can be decreased and may be even removed.

In embodiments of the present invention where the pH is modulated, preferably labels are used for which the luminescence is depending on the acidity of the environment they are in. Such a label may for example be 5(6)-Carboxynaphthofluorescein, or 7-Hydroxycoumarin-3-carboxylic acid, or 6,8-Dihydroxy-1,3-pyrenedisulfonic acid disodium salt. A luminescent label might be chosen for which the absorption spectrum or the emission spectrum or both spectra change under influence of a changed acidity. In embodiments of the present invention a pH sensitive fluorophore may be used. In embodiments of the present invention this fluorophore is provided with an end group such that it can be used to label antibodies or other capture probes.

In order to be able to modulate the pH of the sample, a modulator 130 in a device according to embodiments of the present invention may comprise a reservoir with a fluid of a basic or acidic nature, with a pH different from the pH of the sample. When the modulator 130 is activated, the fluid of the reservoir may be mixed with the sample, so as to change the sample's pH. For instance, the pH of the sample may be changed such that the luminescent labels bound to the analyte have a strongly different absorption or emission spectrum, such that a background signal can be determined, which can then be deducted from the earlier measurement signal so as to obtain a signal with an improved signal to noise ratio.

The pH of the sample may also be modulated during sample preparation wherein different mixtures are prepared that are nominally identical, except for a different pH. This may for example be done in the case of pre-incubation with the detection probe. In that case for example a solution (buffer) is added with the probe. In the sample preparations samples may be prepared that are nominally identical, except for a different pH. These different samples may flow alternatingly through the cavity 180, over the surface 190.

According to the present invention excitation light is modulated and photoswitchable labels are used (e.g. C30H19F6N506). These dyes are photoactivatable by modulating the excitation light source. Preferably photoswitching is reversible.

The modulation of the physical parameter is used to selectively switch on or off the signal of the fluorophores, or of the background contributions. By doing measurements at different parameter levels, knowing that at one level the desired signal is switched off, the background signal can be determined, which determined background signal can then be removed (e.g. subtracted) from the signal measured at the other level of the parameter. Instead of completely switching on/off contributions to the desired signal and/or to the background signal partial switching may be implemented.

In embodiments of the present invention the modulator 130 can modulate the amount of luminescent targets contributing to the desired signal and/or to the amount of sources contributing to the background signal. The targets may be immobilized against a surface 190. Modulations may be applied that influence the amount of immobilized target molecules (with label), or the rate of change of this amount, in a different way than that they influence the amount of (some of) the background contributions, or the rate of change of this amount.

In embodiments of the present invention some non-specific bonds (which bind a background source against the surface 190) are much weaker than the specific bonds (or affinity bonds which bind the targets against the surface 190). Stimuli (e.g. pH, ionic strength, adding a detergent, changing the solvent (e.g. mixing some ethylene glycol or acetonitrile into the water)) that break the weak non-specific bonds (background) and not the specific bonds (signal) can be used to remove this part of the background.

Some non-specific bonds (e.g. hydrophobic interactions) are very strong, and will not be broken by the stimuli that are used to break the specific (affinity) bonds. Also other sources of background are not (or less) affected by such stimuli, such as scattering, autofluorescence of fixed centers in the device, etc. Stimuli that break the specific bonds (which generate the desired signal) and not the strong non-specific bonds (background) and other unaffected sources of background can be used to remove this part of the background. After breaking the specific bonds the measured signal is only a background signal. This background signal can be subtracted from the signal measured before the specific bonds were broken.

Modulations or stimulations with effect on the binding or immobilization of the desired and/or undesired events include pH, ionic strength, surfactants, solvents, temperature, etc.

In embodiments of the present invention the modulator 130 can modulate the rate at which the amount of luminescent targets increases. Instead of modulating the amount of bound material, i.e. by moving it on and off the sensor surface 190, the rate at which the target binds to the surface 190 may be modulated.

In one embodiment this is may be done by alternating the flow over the sensor surface 190 of the device 100 between flow of a liquid comprising the unknown concentration of the target, and a flow of a buffer without the target molecules or with a known concentration of target molecules. It is thereby advantageous for embodiments of the present invention that the association of the target continues for much longer before it saturates (even hours) than the accumulation of the background signals (which can reach saturation in e.g. minutes or seconds). This is especially the case when the targets are present at low concentration (where the signal-to-noise ratio is worst). In that case the association of the target continues for much longer before it saturates (even hours) than the accumulation of the background signals (which can reach saturation in e.g. minutes or seconds).

Hence, after the background signals have saturated, modulating the concentration of the target molecule (e.g. between unknown sample and zero) will modulate the slope of the accumulation curve. The difference in slope between accumulation with and without unknown sample can then be used to determine the target concentration in the unknown sample. In embodiments of the present invention the slope is obtained by comparing the slope measured in the presence of the known (for instance zero) concentration with the slope measured in the presence of the unknown concentration.

In embodiments of the present invention the slope is determined by measuring multiple times. This may be done by measuring continuously in real-time. Thereby, a plurality of measurements is obtained which allows to accurately determine the slope. It is thereby an advantage that a slope measurement is not sensitive to offsets or to any background signals which have already saturated.

It is thereby an advantage that any remaining drifts and fluctuations in the device 100 can be eliminated as long as they are independent of the switch between unknown sample flow and reference flow. Such drifts and fluctuations can e.g. come from temperature drift or fluctuations in the setup, drift or fluctuations in the intensity of the excitation light, of the coupling efficiency of the fluorescent light into the detector, etc.

In embodiments of the present invention the buffer or reference flow with a known amount of target molecules or without target molecules has a similar composition as the unknown sample, such that the background signals themselves are changed as little as possible by the modulation. This can be achieved by making the matrix of the buffer solution similar to the matrix of the unknown sample; or also by adding the same or similar blocking agents to both the unknown sample and the buffer.

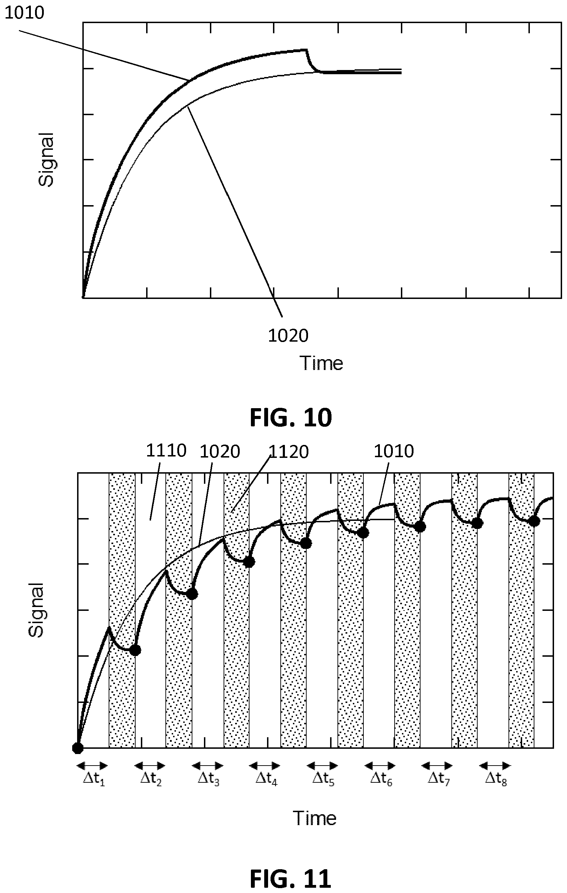

In an exemplary embodiment of the present invention alternating the flow between sample and buffer is done as follows. In an assay, when the injection of the sample is started, there is typically also a change in the solution, e.g. from running buffer to the actual sample (e.g. serum) in which the target needs to be measured. This gives rise to additional background signals, such that the measured signal 1010, which is the desired signal plus the background signal, differs from the desired signal 1020, as shown in FIG. 10. In an endpoint measurement, one switches back to the running buffer and waits for the background signals to disappear before performing the actual measurement.

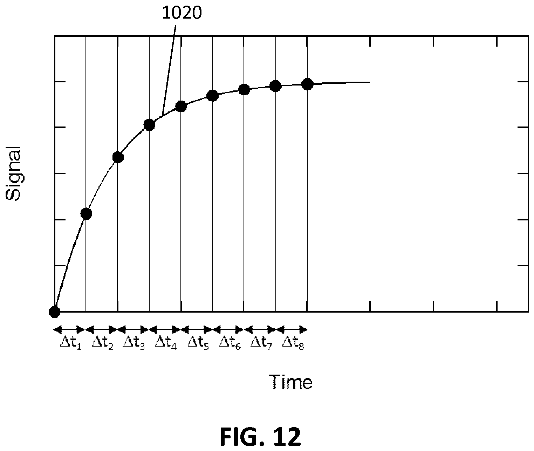

In a real-time measurement, when one tries to follow the time evolution of the desired signal, the measurements would in fact give the time evolution of desired signal plus background signal. In embodiments of the present invention this problem is solved by switching back and forth between sample and running buffer as is illustrated in FIG. 11. The targets (plus label, in the case of pre-incubation), connect with the affinity probes and build up on the surface during the "white" intervals 1110 on the graph, and data points can be taken at the end of the "grey" intervals 1120 with buffer flow, when the background signals have vanished. By plotting these data points as function of the total accumulation time (i.e., only taking into account the "white" intervals 1110 and not the "grey" ones 1120), the time evolution of the desired signal only, without the background contributions, can be reconstructed. This is illustrated by the curve in FIG. 12. In this way the advantages of real-time measurements (faster time-to-result, better accuracy, better identification of unwanted trends or deviations from the desired protocol, e.g. identification of air bubbles in the sample) can be combined with the advantages of endpoint measurements (e.g. wash steps that remove many of the parasitics or background signals).

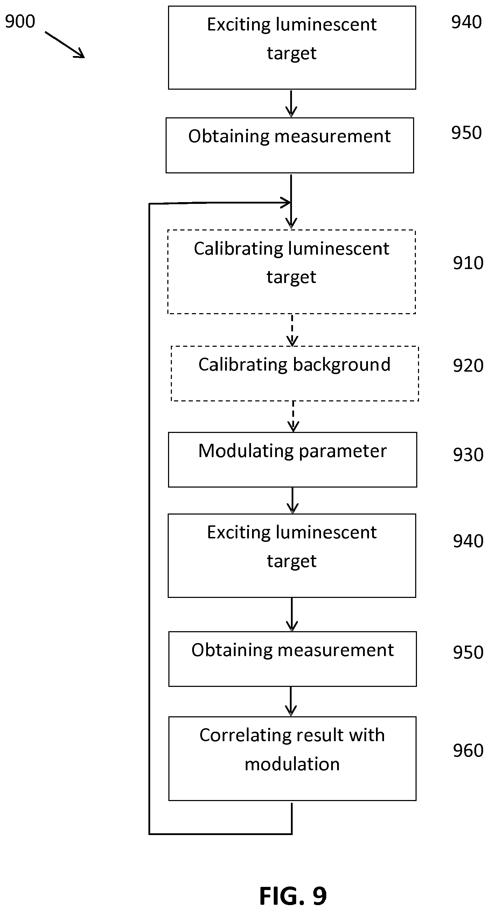

In a second aspect, the present invention provides a method for quantifying luminescent targets. FIG. 9 shows the different steps of a method 900 according to embodiments of the present invention. Calibration steps 910, 920 are optional calibration steps. In step 910 the luminescence of the target is calibrated in function of the modulation of the physical signal. In step 920 the dependency of the background signal is calibrated in function of the modulation of the physical signal.

Embodiments of the present invention comprise a calibration step wherein the modulated physical signal is the temperature of the device. In this calibration step the temperature dependency of a system comprising only background signals and/or the temperature dependency of a system dominantly comprising the desired signal are measured. In embodiments of the present invention the signal to noise ratio can be increased by correlating these dependencies with the measured signal. The calibration data may be known a priori (e.g. a label with known temperature dependence, the temperature dependence of the background signal may be determined in the lab). The calibration data may be obtained at the start of a measurement (before the specific binding takes place). The calibration data may be obtained using a reference channel wherein no specific signal is present in the reference channel. It is thereby an advantage that the calibration can be done in the reference channel while measuring the desired signal (together with the background signal) in another channel.

The calibration steps in the exemplary embodiment of FIG. 9 are followed by a modulation step 920 wherein the physical parameter, e.g. temperature, light, pH etc., is modulated. The modulation step 930 is followed by an excitation step 940 wherein the luminescent targets are excited and a detection step 950 for detecting the luminescent signal generated by the luminescent targets. The measurement results are correlated with the applied modulation in the correlating step 960. The correlating step may thereby take into account the (calibrated or known) dependency of the luminescence of the target on the modulation of the physical parameter and/or the (calibrated or known) dependency of the background signal on the modulation of the physical parameter. This sequence of steps is repeated at least once. From the measurement results which are correlated with the modulation of the parameter in the different passes, a measurement signal with improved signal to noise ratio is obtained.

Sensor devices 100 according to embodiments of the present invention may be used in bioreactors. Bioreactors are, for example, used in the pharmaceutical industry, in food and agriculture (e.g. beer), in cell and tissue culturing (e.g. stem cells, regenerative medicine). In those cases, (affinity-based) (bio)sensor devices 100, according to the present invention, can be used to monitor if the culture is performing fine (e.g. check nutrients, measure the concentration of a product the culture is fabricating, check for contaminations).

## Claims

1. A sensor device (100) for quantifying targets labeled with photoswitchable luminescent labels, wherein the device comprises

   - a light source (111) for exciting the labeled targets, thus generating luminescence signals,
   - a detector (120) for detecting the luminescence signals of the labeled targets, resulting in a detected signal which comprises a desired signal originating from the labeled targets and a background signal,
   - a surface (190) or a three dimensional volume for binding the labeled targets,
   - a modulator (130) for modulating a physical parameter resulting in a modulation of the desired signal which is different from the modulation of the background signal wherein the modulator is at least adapted for photoactivating and deactivating the labeled targets by modulating the exciting light, and
   - a processor (140) configured to correlate the modulation of the exciting light with the modulation of the desired signal, so as to generate a measurement signal with improved signal to noise ratio representative for the quantification of labeled targets,

   wherein the sensor device comprises an evanescent field generating structure (110), wherein the light source (111) is coupled to the evanescent field generating structure (110) and wherein the evanescent field generating structure (110) is adapted for generating an evanescent field at the surface (190) or in the three dimensional volume.

2. A sensor device (100) according to claim 1, wherein the processor (140) is adapted for taking into account the dependency of the luminescent signal of the target on the modulation of the physical parameter and/or the dependency of the background signal on the modulation of the physical parameter.

3. A sensor device (100) according to any of the previous claims, adapted for use with targets labeled with photoswitchable fluorescent labels.

4. A sensor device (100) according to any of the previous claims, wherein the modulator (130) is adapted for changing the temperature of the device.

5. A sensor device (100) according to any of the previous claims, wherein the modulator (130) is adapted for changing the power and/or the wavelength of excitation light generated by the light source (111).

6. A sensor device (100) according to any of the previous claims, for use with the target present in a liquid, wherein the modulator (130) is adapted for changing the pH value of the liquid.

7. A sensor device (100) according to any of the previous claims, wherein the modulator (130) is adapted for modulating the amount of labeled targets contributing to the desired signal and/or the amount of sources contributing to the background signal.

8. A sensor device (100) according to any of the previous claims, wherein the modulator (130) is adapted for modulating the rate at which the amount of labeled targets binds.

9. A diagnostic device comprising a sensor device according to any of the previous claims for sensing target molecules labeled with photoswitchable luminescent labels and generating a sensing signal, and an output unit for providing an output of said sensor device on which a diagnose can be based.

10. A diagnostic device according to claim 9, wherein the output unit is adapted for outputting a signal representative for presence / absence or concentration of the labeled targets.

11. A method (900) for quantifying targets labeled with a photoswitchable luminescent label, the method comprising:

- exciting (940) the labeled targets at a surface or a three dimensional volume where the labeled targets are bound with exciting light, thus generating a luminescence signal,
- detecting (950) a first measured luminescence signal, wherein the measured luminescence signal comprises a desired signal emanating from the labeled targets and a background signal,
- modulating (930) a physical parameter wherein the modulating step (930) at least comprises photoactivating and deactivating the labeled targets by modulating the exciting light,
- repeating the exciting and detecting steps, thus obtaining a second measured luminance signal, wherein the modulating of the exciting light has resulted in a modulation of the desired signal which is different from the modulation of the background signal, and
- correlating (960) the modulation of the exciting light with the modulation of the desired signal, thus obtaining a quantification of the labeled targets with improved signal to noise ratio, wherein the labeled targets are illuminated by coupling the exciting light to an evanescent field generating structure thereby generating an evanescent field at the surface or in the three dimensional volume.

12. A method (900) according to claim 11, wherein the correlating step comprises taking into account the dependency of the desired signal on the modulation of the physical parameter and/or the dependency of the background on the modulation of the physical parameter.

13. A method according to any of claims 11 or 12, comprising:

- calibrating (910) the luminescence of the target in function of the modulation of the physical parameter, and/or
- calibrating (920) the dependency of the background signal in function of the modulation of the physical signal.

**Patentansprüche**

1. Eine Sensorvorrichtung (100) zur Quantifizierung von Zielen, die mit photoschaltbaren Lumineszenzmarkierungen markiert sind, wobei die Vorrichtung Folgendes umfasst

- eine Lichtquelle (111) zur Anregung der markierten Zielobjekte, um Lumineszenzsignale zu erzeugen,
- einen Detektor (120) zum Erfassen der Lumineszenzsignale der markierten Ziele, was zu einem erfassten Signal führt, das ein von den markierten Zielen stammendes gewünschtes Signal und ein Hintergrundsignal umfasst,
- eine Oberfläche (190) oder ein dreidimensionales Volumen zur Bindung der markierten Ziele,
- einen Modulator (130) zum Modulieren eines physikalischen Parameters, der zu einer Modulation des gewünschten Signals führt, die sich von der Modulation des Hintergrundsignals unterscheidet, wobei der Modulator zumindest dazu ausgelegt ist, die markierten Ziele durch Modulation des Anregungslichts photozuaktivieren und zu deaktivieren, und

- einen Prozessor (140), der so konfiguriert ist, dass er die Modulation des Anregungslichts mit der Modulation des gewünschten Signals korreliert, um ein Messsignal mit verbessertem Signal-Rausch-Verhältnis zu erzeugen, das für die Quantifizierung von markierten Zielen repräsentativ ist,

wobei die Sensorvorrichtung eine ein evaneszentes Feld erzeugende Struktur (110) umfasst, wobei die Lichtquelle (111) mit der ein evaneszentes Feld erzeugenden Struktur (110) gekoppelt ist und wobei die ein evaneszentes Feld erzeugende Struktur (110) dazu ausgelegt ist, ein evaneszentes Feld an der Oberfläche (190) oder in dem dreidimensionalen Volumen zu erzeugen.

2. Eine Sensorvorrichtung (100) nach Anspruch 1, wobei der Prozessor (140) dazu ausgelegt ist, die Abhängigkeit des Lumineszenzsignals des Ziels von der Modulation des physikalischen Parameters und/oder die Abhängigkeit des Hintergrundsignals von der Modulation des physikalischen Parameters zu berücksichtigen.

3. Eine Sensorvorrichtung (100) nach einem der vorstehenden Ansprüche, die dazu ausgelegt ist, mit Zielen verwendet zu werden, die mit photoschaltbaren Fluoreszenzmarkierungen markiert sind.

4. Eine Sensorvorrichtung (100) nach einem der vorstehenden Ansprüche, wobei der Modulator (130) dazu ausgelegt ist, die Temperatur der Vorrichtung zu ändern.

5. Eine Sensorvorrichtung (100) nach einem der vorstehenden Ansprüche, wobei der Modulator (130) dazu ausgelegt ist, die Leistung und/oder die Wellenlänge des von der Lichtquelle (111) erzeugten Anregungslichts zu verändern.

6. Eine Sensorvorrichtung (100) nach einem der vorstehenden Ansprüche zur Verwendung mit dem in einer Flüssigkeit vorhandenen Ziel, wobei der Modulator (130) dazu ausgelegt ist, den pH-Wert der Flüssigkeit zu verändern.

7. Eine Sensorvorrichtung (100) nach einem der vorstehenden Ansprüche, wobei der Modulator (130) dazu ausgelegt ist, die Menge der markierten Ziele, die zum gewünschten Signal beitragen, und/oder die Menge der Quellen, die zum Hintergrundsignal beitragen, zu modulieren.

8. Eine Sensorvorrichtung (100) nach einem der vorstehenden Ansprüche, wobei der Modulator (130) dazu ausgelegt ist, die Rate zu modulieren, mit der sich die Menge der markierten Ziele bindet.

9. Diagnosevorrichtung, umfassend
eine Sensorvorrichtung nach einem der vorstehenden Ansprüche zum Erfassen von Zielmolekülen, die mit photoschaltbaren Lumineszenzmarkierungen markiert sind, und zum Erzeugen eines Messsignals, und eine Ausgabeeinheit zum Bereitstellen einer Ausgabe der Sensorvorrichtung, auf der eine Diagnose basieren kann.

10. Eine Diagnosevorrichtung nach Anspruch 9, wobei die Ausgabeeinheit dazu ausgelegt ist, ein Signal auszugeben, das für das Vorhandensein/Fehlen oder die Konzentration der markierten Ziele repräsentativ ist.

11. Ein Verfahren (900) zur Quantifizierung von Zielen, die mit einer photoschaltbaren Lumineszenzmarkierung markiert sind, wobei das Verfahren Folgendes umfasst :

- Anregen (940) der markierten Ziele an einer Oberfläche oder in einem dreidimensionalen Volumen, in dem die markierten Ziele gebunden sind, mit Anregungslicht, wodurch ein Lumineszenzsignal erzeugt wird,
- Erfassen (950) eines ersten gemessenen Lumineszenzsignals, wobei das gemessene Lumineszenzsignal ein von den markierten Zielen ausgehendes erwünschtes Signal und ein Hintergrundsignal umfasst,
- Modulieren (930) eines physikalischen Parameters, wobei der Modulationsschritt (930) zumindest die Photoaktivierung und -deaktivierung der markierten Ziele durch Modulation des Anregungslichts umfasst,
- Wiederholen der Anregungs- und Erfassungsschritte, wodurch ein zweites gemessenes Luminanzsignal erhalten wird, wobei die Modulation des Anregungslichts zu einer Modulation des gewünschten Signals geführt hat, die sich von der Modulation des Hintergrundsignals unterscheidet, und
- Korrelieren (960) der Modulation des Anregungslichts mit der Modulation des gewünschten Signals, wodurch eine Quantifizierung der markierten Ziele mit verbessertem Signal-Rausch-Verhältnis erhalten wird, wobei die markierten Ziele durch Einkoppeln des Anregungslichts in eine ein evaneszentes Feld erzeugende Struktur beleuchtet werden, wodurch ein evaneszentes Feld an der Oberfläche oder in dem dreidimensionalen Volumen erzeugt wird.

**12.** Ein Verfahren (900) nach Anspruch 11, wobei der Korrelationsschritt die Berücksichtigung der Abhängigkeit des gewünschten Signals von der Modulation des physikalischen Parameters und/oder der Abhängigkeit des Hintergrunds von der Modulation des physikalischen Parameters umfasst.

**13.** Ein Verfahren nach einem der Ansprüche 11 oder 12, umfassend:

- Kalibrieren (910) der Lumineszenz des Ziels in Abhängigkeit von der Modulation des physikalischen Parameters, und/oder
- Kalibrieren (920) der Abhängigkeit des Hintergrundsignals in Abhängigkeit von der Modulation des physikalischen Signals.

**Revendications**

**1.** Un dispositif capteur (100) pour quantifier des cibles marquées avec des étiquettes luminescentes photoswitchables, dans lequel le dispositif comprend :

• une source lumineuse (111) pour exciter les cibles marquées, générant ainsi des signaux de luminescence,
• un détecteur (120) pour détecter les signaux de luminescence des cibles marquées, résultant en un signal détecté qui comprend un signal souhaité provenant des cibles marquées et un signal de fond,
• une surface (190) ou un volume tridimensionnel pour lier les cibles marquées,
• un modulateur (130) pour moduler un paramètre physique résultant en une modulation du signal souhaité qui est différente de la modulation du signal de fond, dans lequel le modulateur est au moins adapté pour photoactiver et désactiver les cibles marquées en modulant la lumière excitante, et
• un processeur (140) configuré pour corréler la modulation de la lumière excitante avec la modulation du signal souhaité, afin de générer un signal de mesure avec un rapport signal sur bruit amélioré représentatif de la quantification des cibles marquées, dans lequel le dispositif capteur comprend une structure génératrice de champ évanescent (110), dans laquelle la source lumineuse (111) est couplée à la structure génératrice de champ évanescent (110) et dans laquelle la structure génératrice de champ évanescent (110) est adaptée pour générer un champ évanescent à la surface (190) ou dans le volume tridimensionnel.

**2.** Un dispositif capteur (100) selon la revendication 1, dans lequel le processeur (140) est adapté pour prendre en compte la dépendance du signal luminescent de la cible sur la modulation du paramètre physique et/ou la dépendance du signal de fond sur la modulation du paramètre physique.

**3.** Un dispositif capteur (100) selon l'une quelconque des revendications précédentes, adapté pour une utilisation avec des cibles marquées avec des étiquettes fluorescentes photoswitchables.

**4.** Un dispositif capteur (100) selon l'une quelconque des revendications précédentes, dans lequel le modulateur (130) est adapté pour changer la température du dispositif.

**5.** Un dispositif capteur (100) selon l'une quelconque des revendications précédentes, dans lequel le modulateur (130) est adapté pour changer la puissance et/ou la longueur d'onde de la lumière d'excitation générée par la source lumineuse (111).

**6.** Un dispositif capteur (100) selon l'une quelconque des revendications précédentes, pour une utilisation avec la cible présente dans un liquide, dans lequel le modulateur (130) est adapté pour changer la valeur de pH du liquide.

**7.** Un dispositif capteur (100) selon l'une quelconque des revendications précédentes, dans lequel le modulateur (130) est adapté pour moduler la quantité de cibles marquées contribuant au signal souhaité et/ou la quantité de sources contribuant au signal de fond.

**8.** Un dispositif capteur (100) selon l'une quelconque des revendications précédentes, dans lequel le modulateur (130) est adapté pour moduler la vitesse à laquelle la quantité de cibles marquées se lie.

**9.** Un dispositif de diagnostic comprenant

un dispositif capteur selon l'une quelconque des revendications précédentes pour détecter des molécules cibles marquées avec des étiquettes luminescentes photoswitchables et générer un signal de détection, et une unité de sortie pour fournir une sortie dudit dispositif capteur sur laquelle un diagnostic peut être basé.

**10.** Un dispositif de diagnostic selon la revendication 9, dans lequel l'unité de sortie est adaptée pour émettre un signal représentatif de la présence/absence ou de la concentration des cibles marquées.

**11.** Un procédé (900) pour quantifier des cibles marquées avec une étiquette luminescente photoswitchable, le procédé comprenant :

- exciter (940) les cibles marquées sur une surface ou un volume tridimensionnel où les cibles marquées sont liées avec une lumière excitante, générant ainsi un signal de luminescence,
- détecter (950) un premier signal de luminescence mesuré, dans lequel le signal de luminescence mesuré comprend un signal souhaité émanant des cibles marquées et un signal de fond,
- moduler (930) un paramètre physique dans lequel l'étape de modulation (930) comprend au moins photoactiver et désactiver les cibles marquées en modulant la lumière excitante,
- répéter les étapes d'excitation et de détection, obtenant ainsi un second signal de luminance mesuré, dans lequel la modulation de la lumière excitante a résulté en une modulation du signal souhaité qui est différente de la modulation du signal de fond, et
- corréler (960) la modulation de la lumière excitante avec la modulation du signal souhaité, obtenant ainsi une quantification des cibles marquées avec un rapport signal sur bruit amélioré, dans lequel les cibles marquées sont éclairées en couplant la lumière excitante à une structure génératrice de champ évanescent, générant ainsi un champ évanescent à la surface ou dans le volume tridimensionnel.

**12.** Un procédé (900) selon la revendication 11, dans lequel l'étape de corrélation comprend la prise en compte de la dépendance du signal souhaité sur la modulation du paramètre physique et/ou la dépendance du fond sur la modulation du paramètre physique.

**13.** Un procédé selon l'une quelconque des revendications 11 ou 12, comprenant :

- calibrer (910) la luminescence de la cible en fonction de la modulation du paramètre physique, et/ou
- calibrer (920) la dépendance du signal de fond en fonction de la modulation du paramètre physique.

**FIG. 1**

**FIG. 2**

**FIG. 3**

**FIG. 4**

**FIG. 5**

**FIG. 6**

**FIG. 7**

**FIG. 8**

900

| Exciting luminescent target | 940 |

↓

| Obtaining measurement | 950 |

↓

| Calibrating luminescent target | 910 |

↓

| Calibrating background | 920 |

↓

| Modulating parameter | 930 |

↓

| Exciting luminescent target | 940 |

↓

| Obtaining measurement | 950 |

↓

| Correlating result with modulation | 960 |

**FIG. 9**

1010

Signal

1020

Time

**FIG. 10**

1110 1020 1120 1010

Signal

$\Delta t_1$  $\Delta t_2$  $\Delta t_3$  $\Delta t_4$  $\Delta t_5$  $\Delta t_6$  $\Delta t_7$  $\Delta t_8$

Time

**FIG. 11**

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010041166 A1
- US 2010267165 A1
- US 2005008253 A1
- US 2014154813 A1

**Non-patent literature cited in the description**

- **AMOS DANIELLI et al.** Detection of fluorescent-labeled probes at subpicomolar concentrations by magnetic modulation. *OPTICS EXPRESS,* 10 November 2008, vol. 16 (23), 19253-19259